(19) **Europäisches Patentamt**
**European Patent Office**
**Office européen des brevets**

(11) Veröffentlichungsnummer: **0 286 047 B1**

(12) **EUROPÄISCHE PATENTSCHRIFT**

(45) Veröffentlichungstag der Patentschrift: **18.12.91**

(51) Int. Cl.⁵: **B07B 7/083**, B07B 7/08

(21) Anmeldenummer: **88105382.1**

(22) Anmeldetag: **05.04.88**

(54) Zentrifugalkraftsichter.

(30) Priorität: **10.04.87 DE 3712136**

(43) Veröffentlichungstag der Anmeldung:
**12.10.88 Patentblatt 88/41**

(45) Bekanntmachung des Hinweises auf die
Patenterteilung:
**18.12.91 Patentblatt 91/51**

(84) Benannte Vertragsstaaten:
**AT BE CH DE ES FR GB GR IT LI NL SE**

(56) Entgegenhaltungen:
**DE-A- 3 629 878**
**DE-B- 1 757 582**
**DE-C- 2 951 819**
**DE-C- 3 508 889**

(73) Patentinhaber: **OMYA GmbH**
**Brohler Strasse 11**
**W-5000 Köln 1(DE)**

(72) Erfinder: **Barthelmess, Ulrich**
**Grosse Gasse 25**
**W-7908 Niederstotzingen(DE)**

(74) Vertreter: **Kreutz, Karl Jürgen, Dipl.-Ing.**
**Patentanwalt Osterwaldstrasse 149**
**W-8000 München 40(DE)**

Rank Xerox (UK) Business Services

**Beschreibung**

Die Erfindung betrifft einen Zentrifugalkraftsichter gemäß dem Oberbegriff des Patentanspruchs 1. Derartige Sichter sind bereits aus der DE-B-1757 582 oder aus der DE-C-29 51 819 bekannt geworden.

Bei den bekannten Sichtern ist die Rotorwelle mittels Gleitlagern oder Wälzlagern in dem Gehäuse oder Gestell gelagert. Die Lager müssen geschmiert und gegen Eindringen von Partikeln geschützt werden. Andererseits muß verhindert werden, daß Schmiermittel-Teilchen in das Produkt gelangen. Daher müssen die Lager sorgfältig von dem Rotorschaufelkranz bzw. von den eigentlichen Produktionsraum getrennt und abgedichtet bzw. gekapselt sein. Diese Maßnahmen sind teuer. Vor allem werden der Aufbau der Maschine schwerer und es wird ein größerer Raum, insbesondere in axialer Richtung benötigt. Bei der herkömmlichen Bauweise ist die Welle mit zwei in axialem Abstand angeordneten Lagern gelagert, welche außerhalb des Gehäuses zwischen dem Sichterkorb und dem Antrieb angebracht sind. Der Wellendurchtritt zwischen Gehäuse und Welle muß abgedichtet werden, um ein Ansaugen von "Fremdluft" von außen bzw. Eindringen von Fremdpartikeln zu vermeiden. Durch diese Dichtung zwischen Gehäuse und Welle vergrößert sich der Abstand zwischen dem Sichterkorb und dem Lager an der Außenseite des Gehäuses. Dadurch wird wiederum die Welle dikker und es werden zur Sicherung der Stabilität zwei Lager in axialem Abstand erforderlich.

Dem gegenüber liegt der Erfindung die Aufgabe zugrunde, Zentrifugalkraftsichter dieser Art zu schaffen, welche keine besondere Dichtung zwischen Welle und Gehäuse benötigen und mit einer kürzeren Welle, d.h. mit kürzerer axialer Erstreckung gebaut werden können

Die Lösung dieser Aufgabe ist in dem Kennzeichnungsteil des Patentanspruchs 1 angegeben. Danach ist die Rotorwelle mittels wenigstens eines mit einem Fluid spülbaren Lagers in dem Gehäuse, insbesondere in der Gehäusestirnwand gelagert, wobei das Lager gleichzeitig als Dichtung wichen Rotor und Gehäuse dient. Es ist also keine besondere Dichtung erforderlich, da das für den Betrieb des Lagers erforderliche Fluid gleichzeitig zur Dichtung bzw. als Absperrung zwischen Gehäuseinnenraum und äußerer Atmosphäre dient. Es versteht sich, daß das Fluid mit dem Arbeitsmedium oder Produkt im Innern des Gehäuses verträglich ist. Üblicherweise ist dies Luft oder ein Inertgas. Man kann das Fluid auch in flüssigem Aggregatzustand zuführen und also in dem Dichtungsspalt oder Lagerspalt verdampfen lassen, so daß das Lager gleichzeitig gekühlt wird.

Im übrigen sind vielfältige Ausgestaltungen und Variationen möglich. Einige davon sind in den Unteransprüchen angegeben. Man kann mit einem einzigen in der Gehäusestirnwand angebrachten Lager zwischen Rotorschaufelkorb und Antrieb auskommen. Man kann aber auch außer dem einen, in der Gehäusestirnwand angebrachten Lager noch ein weiteres Lager anbringen. Dies kann ein herkömmliches, also geschmiertes Lager sein. Es kann aber auch ebenfalls ein schmiermittelfreies Fluid-Lager sein. In diesem Fall können beide Lager in einem gemeinsamen Lagergehäuse angebracht sein. Auf diese Weise ist die Abdichtung gegen die äußere Atmosphäre zweistufig, also erleichtert.

Eine weitere Ausgestaltung besteht darin, daß außer einem Lager zwischen Rotorwelle und Gehäusestirnwand noch ein weiteres, schmiermittelfreies Lager zwischen dem Feingut-Sichtluft-Auslaß und einem Stirnring des Rotors vorgesehen ist.

Eine besonders kompakte Bauweise ist dadurch gegeben, daß der Antriebsmotor in einem axial an das Sichtergehäuse angesetzten Gehäuse angeordnet bzw. "angeflanscht" ist, wobei zwei schmiermittelfreie Lager vorgesehen sind, nämlich ein Lager zwischen Sichterkorb und Motor und das zweite Lager an der von dem Sichterkorb abgelegenen Stirnwand des Motorgehäuses. Hierbei wird der Läufer des Motors selbst durch das Sperrmittel zusätzlich gekühlt und von Fremdkörpern freigehalten.

Außer aerostatischen bzw. Inertgas-statischen Lagern, kommen auch elektromagnetische Lager in Frage, welche durch ein Spülmittel oder Sperrmittel gespült werden. Die elektromagnetischen Lager sind zwar teurer, es ergibt sich aber die Möglichkeit, einen elektromotorischen Antrieb in das Lager zu integrieren bzw. an das elektromagnetische Lager anzubauen.

Es sei erwähnt, daß die Erfindung mit dem gleichen Vorteil außer bei Zentrifugalkraftsichtern auch bei anderen Maschinen angewendet werden kann, bei welchen ein Rotor in dem Gehäuse derart gelagert werden muß, daß der Rotor gegenüber dem Gehäuse bzw. Gehäuseeinbauten einerseits und gegenüber der äußeren Atmosphäre abgedichtet sein muß. Dies ist z.B. der Fall bei Ventilatoren und Gebläsen sowie Pumpen, die zur kontaminationsfreien Förderung gewisser Medien eingerichtet sind.

Nachfolgend werden Ausführungsbeispiele anhand der Zeichnung beschrieben, wobei auch die Merkmale weiterer Unteransprüche erläutert werden.

Fig. 1

zeigt - zum Vergleich - schematisch, im Längsschnitt den herkömmlichen Aufbau eines Sichters mit vom Sichtergehäuse räumlich getrennten, geschmierten Lagern;

Fig. 2
zeigt in analoger Darstellung ein erstes Ausführungsbeispiel oder Erfindung;
Figuren 3 bis 6
zeigen weitere Ausführungsbeispiele.

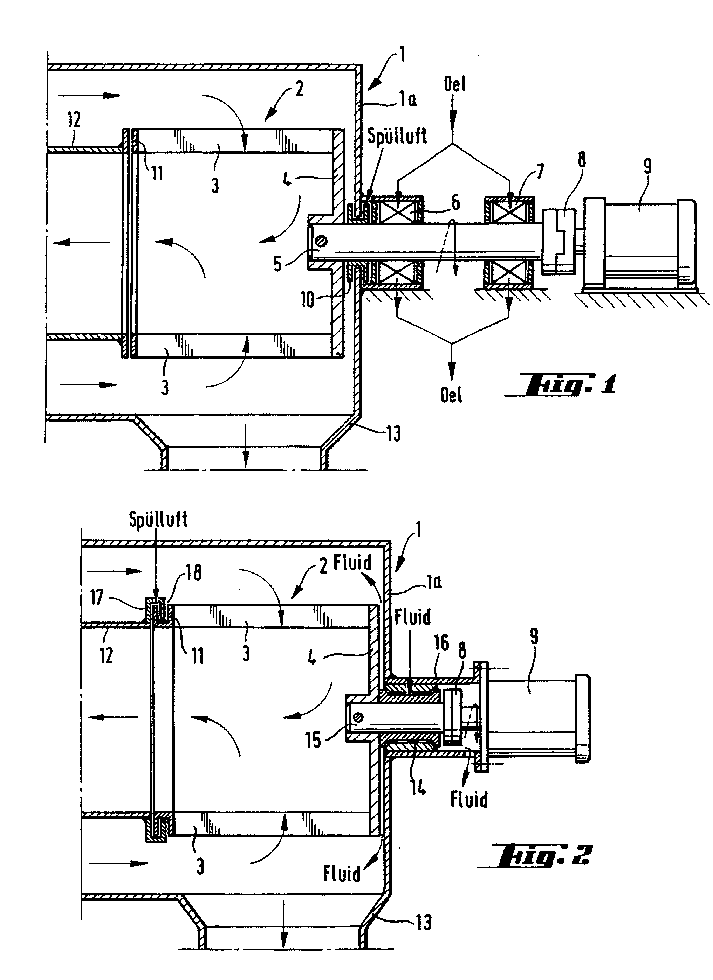

Gemäß Fig. 1 ist in einem Gehäuse 1 ein Rotor
2, insbesondere Sichter-Rotor angeordnet. Der Rotor 2 besteht im wesentlichen aus einem Kranz von
Schaufeln 3, die am Umfang einer Scheibe 4 angebracht sind, die auf einer Welle 5 festgemacht ist.
Die Welle 5 ist mittels zweier herkömmlicher, geschmierter Gleit- oder Rollenlager 6, 7 gelagert.

Die Lager 6, 7 sind neben der Gehäuse-Stirnwand 1a in dem für die Stabilität erforderlichen
axialen Abstand angeordnet. Die Welle 5 und damit
der Rotor 2 werden über eine Kupplung 8 von
einem Elektromotor 9 angetrieben. Zur Abdichtung
des Wellendurchtrittes ist eine Dichtung 10 erforderlich.
An dem der Scheibe 4 gegenüberliegenden Ende
sind die Schaufeln 3 von einem Ring 11 zusammengefaßt, an den sich in axialer Richtung ein
Absaugrohr 12 bzw. der Feingut-Sichtluft-Auslaß
anschließt.
Der Ringraum zwischen dem Absaugrohr 12 und
der Umfangswand des Gehäuses 1 bildet den Einlaß für Sichtgut und Sichtluft (siehe Strömungspfeile).
Ein Grobgut-Auslaß 13 ist an der Unterseite des
Gehäuses vorgesehen.
Wir Figur 2 zeigt, ist gemäß der Erfindung zwischen der Gehäusestirnwand 1a und der Rotorwelle 15 ein fluidstatisches Lager 14 angeordnet; dieses Lager bzw. das Lagerfluid dient gleichzeitig als
Dichtung bzw. Sperrmittel (siehe Strömungspfeile),
so daß - im Gegensatz zu Figur 1 - zwischen
Gehäuse und Welle eine gesonderte Wellendichtung nicht erforderlich ist. Hierdurch verringert sich
der Abstand zwischen dem Rotor 2 und dem Lager
14 (zumindest um die axiale Länge der bisherigen
Wellendichtung). Die Welle 16 wird also entsprechend kürzer; dies hat ferner einen kleineren Wellendurchmesser zur Folge, so daß kein zweites
Lager erforderlich ist. Es ergibt sich somit ein
raumsparender, axial kurzer Aufbau. Die Maschine
ist robust und betriebssicher, insbesondere wegen
des schmiermittelfreien Lagers 14.

Das Fluidlager 14 ist in einem an die Gehäuse-
Stirnwand 1a angesetzten zylindrischen Gehäuse
16 angeordnet, in dem auch die Kupplung 8 untergebracht ist und an das der Motor 9 angeflanscht
ist.
Auf dem Absaugrohr 12 (bzw. Gehäuseinnenrohr)
sitzt ein U-förmiger Profilring 17, der in eine Nut 18
des die Sichterschaufeln 3 an ihrem freien Ende
verbindenden Ringe 11 eingreift. Hierdurch wird
eine besonders wirksame Dichtung zwischen Absaugrohr 12 und Rotor 2 erreicht. Gleichzeitig wird durch diese Anordnung der Rotor 2 an seinem dem
Wellenlager 14 gegenüberliegenden Ende abgestützt.

Wahlweise, insbesondere bei größerer Durchsatzleistung kann ein zweites Lager für die Rotorwelle vorgesehen sein. Dies kann ein herkömmliches Lager sein, oder aber, besser ist gemäß Figur
3 ein weiteres fluidstatisches Lager 14a vorgesehen. Die beiden Lager sind in einem gemeinsamen
Lagergehäuse 16a angeordnet, welches an die
Stirnwand 1a des Gehäuses angesetzt ist. Die Lager 14, 14a haben je eine schräge Schulter zur
axialen Führung in beiden Richtungen. (Das einzige
Lager bei Fig. 2 hat zwei schräge Schultern.)

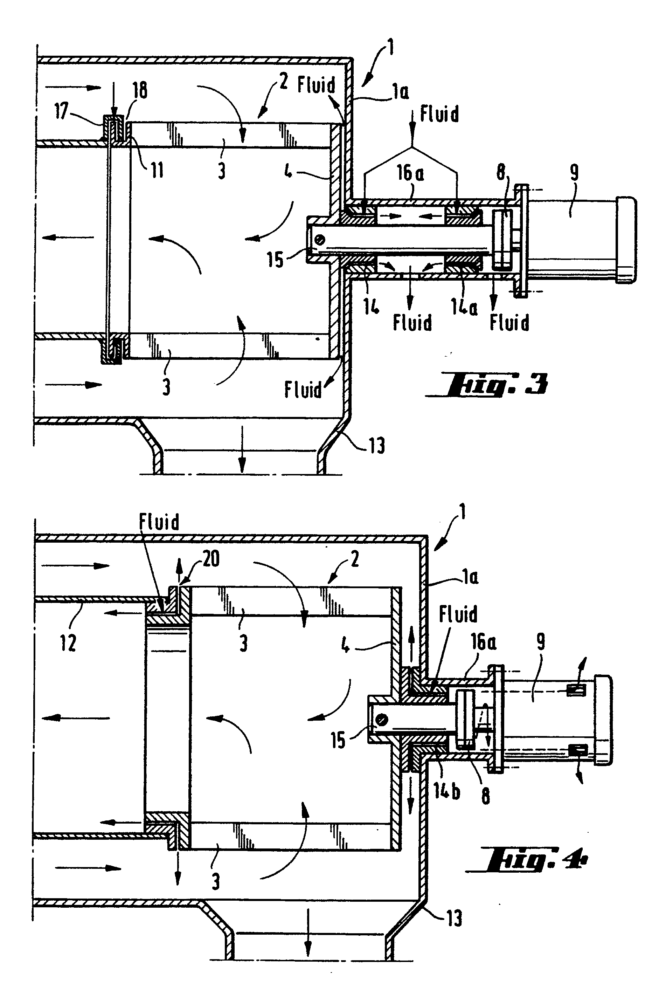

Bei der Ausführung nach Fig. 4 ist ebenfalls
nur ein mit einem Sperrmedium betriebenes Lager
14b in der Gehäusestirnwand 1a vorgesehen.

Dieses Fluid-Lager 14b besteht aus einem Radialteil und einem Axialteil. Das axial aus dem
Lager austretende Fluid-Gas wird durch den Motor
hindurch geführt und durch dessen am hinteren
Ende vorgesehene Lüftungsschlitze abgeführt.

Ein weiteres fluidstatisches Lager 20 ist zwischen Absaugrohr 12 und Rotor 2 angeordnet, welches ebenfalls gleichzeitig zur Abdichtung dient.
Hierdurch sind ein besonders kompakter Aufbau
und eine besonders gute Lagerung gegeben, welche Schwingungen des Rotors verhindert, so daß
der Rotor - bei vermindertem Gewicht - bessere
Festigkeit und damit Sicherheit aufweist.
Das Fluidlager 20 besteht ebenfalls aus einem Axialteil und einem Radialteil.

Die Erfindung schafft die Grundlage für noch
weitere Konstruktionen, beispielsweise gemäß Figur 5:
Hierbei ist der Antrieb in einem besonderen, axial
an das Sichtergehäuse angesetzten Gehäuse 21
angeordnet. Der Läufer 22 des Motors sitzt unmittelbar, ohne zwischengefügte Kupplung, auf der
Rotorwelle 15. Die Rotorwelle 15 (bzw. Motorwelle)
ist mittels zweier fluidstatischer Lager 14c, 14d,
gelagert, die jeweils in die zugehörigen Gehäusestirnwände eingesetzt sind und ebenfalls gleichzeitig zur Dichtung dienen. Der Stator 23 des Motors
ist an dem Umfangsteil des Motorgehäuses angebracht.

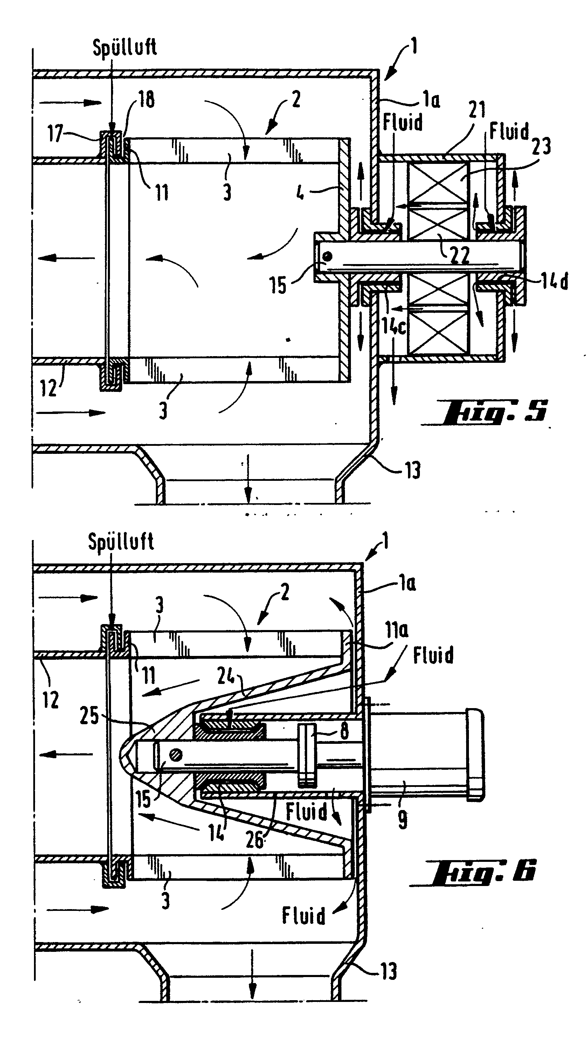

Bei der Ausführung gemäß Figur 6 ist der
Rotor nicht außerhalb sondern innerhalb des von
den Rotorschaufeln umschriebenen Raumes gelagert. Und zwar ist statt der Scheibe 4 ein Hohlkegel
24 vorgesehen, dessen verjüngtes, axial inneres
Ende als Nabe 25 für die Rotorwelle ausgebildet
ist. Die Welle 15 ist mittels eines vorzugsweise
fluidstatischen Lagers 14 in einer in den Hohlkegel
24 eingreifenden, an der Gehäusestirnwand 1a angebrachten Lagerbüchse 26 gelagert.
Auf diese Weise befindet sich das Lager 15 im
Schwerpunkt des Rotors, so daß das vom Gewicht des Rotors herrührende Kippmoment vermieden ist. Da sich der Hohlkegel 24 in Strömungsrichtung (siehe Pfeile) verjüngt, wird die Strömung innerhalb das Rotors nicht gestört, vielmehr wird die durch die Sichterschaufeln 3 radial eintretende Strömung an der glatten Außenseite des Hohlkegels 24 wirbelarm in die axiale Richtung umgelenkt.

In der Lagerbuchse 26 ist auch die Kupplung 8 untergebracht; der Motor 9 ist außen angeflanscht. Der Antrieb kann aber auch - ähnlich wie bei Figur 5 - so ausgebildet sein, daß er innerhalb des Hohlkegels 24 bzw. der Lagerbuchse 26 Platz findet.

Bezugszeichenliste

| 1 | Gehäuse |
|---|---|
| 1a | Gehäuse-Stirnwand |
| 2 | Rotor |
| 3 | Schaufeln von 2 |
| 4 | Scheibe von 2 |
| 5 | Welle von 2 |
| 6, 7 | herkömmliche Lager, geschmiert |
| 8 | Kupplung |
| 9 | Motor |
| 10 | Dichtung zwischen 1a und 5 |
| 11 | Ring, an 2 |
| 11a | Ring, an 2 bei Fig. 6 |
| 12 | Absaugrohr/Auslaß |
| 13 | Grobgut-Auslaß |
| 14 | fluidstatisches Lager |
| 14a | fluidstatisches Lager |
| 14b | fluidstatisches Lager |
| 14c | fluidstatisches Lager |
| 14d | fluidstatisches Lager |
| 15 | Welle |
| 16 | Gehäuse für Lager 14 |
| 16a | Gehäuse für Lager 14, 14a, 14b |
| 17 | Profilring/U-Ring an 12 |
| 18 | Nut an 11 |
| 20 | Fluidlager außen vorne von 2 |
| 21 | Gehäuse für Lager 14c, 14d (Figur 5) |
| 22 | Läufer |
| 23 | Stator |
| 24 | Hohlkegel (Figur 6) |
| 25 | Nabe |
| 26 | Lagerbuchse |

**Patentansprüche**

1. Zentrifugalkraftsichter mit einem - mit Einlässen für Sichtgut und Sichtluft bzw. einem Sichtgut-Sichtluft-Einlaß und Auslässen für Sichtluft-Feingut-Gemisch und Grobgut versehenen - Gehäuse, in dem wenigstens ein im wesentlichen von einem Kranz von Schaufeln gebildeter Rotor gelagert ist, dadurch gekennzeichnet, daß der Rotor (2) mittels wenigstens eines aerostatischen bzw. inertgas-statischen oder elektromagnetischen Lagers (14, 14a, 14b, 14c, 14d) in dem Gehäuse (1) gelagert ist, welches gleichzeitig als Dichtung zwischen Rotor bzw., Rotorwelle (15) und Gehäuse (1, 1a) dient.

2. Zentrifugalkraftsichter nach Anspruch 1, dadurch gekennzeichnet, daß in das bzw. in eines der beiden Lager, insbesondere elektromagnetischen Lager, ein elektromagnetischer Antrieb eingebaut bzw. an das Lager angebaut ist.

3. Zentrifugalkraftsichter nach Anspruch 1 oder 2, mit einer Dichtung zwischen einem Absaugrohr (12) und dem Rotor (2), dadurch gekennzeichnet, daß die Dichtung als Labyrinthdichtung ausgebildet ist.

4. Zentrifugalkraftsichter nach Anspruch 3, wobei die Rotorschaufeln (3) an ihrem einer Scheibe (4) gegenüberliegenden Ende von einem Ring zusammengehalten sind, dadurch gekennzeichnet, daß an dem Ring (11) eine Umfangsnut (18) vorgesehen ist, in die ein an dem Ende des Absaugrohres (12) angebrachter Ring (17) eingreift.

5. Zentrifugalkraftsichter nach Anspruch 4, dadurch gekennzeichnet, daß zwischen Absaugrohr (12) und Rotor (2) ein aerostatisches bzw. inertgas-statisches oder ein elektromagnetisches Lager vorgesehen ist.

6. Zentrifugalkraftsichter nach einem der Ansprüche 1 - 5, dadurch gekennzeichnet, daß zwischen zwei aerostatischen bzw. inertgas-statischen Lagern (14c, 14d) der Welle (15) des Rotors (2) der Läufer (22) eines elektromagnetischen Antriebes sitzt, dessen Stator (23) am Innenumfang eines an der Gehäusestirnwand (1a) angebrachten Gehäuses (21) sitzt.

7. Zentrifugalkraftsichter nach einem der Ansprüche 1 - 5, dadurch gekennzeichnet, daß an einem dem Absaugrohr (12) gegenüberliegenden Ring (11a) des Rotors (2) ein sich nach innen erstreckender Kegel (24) angebracht ist, dessen Ende als Nabe (25) für die Rotorwelle (15) ausgebildet ist, und daß sich in den Kegel (24) eine an der Gehäusestirnwand (1a) befestigte Lagerbuchse (26) erstreckt, in der die Rotorwelle (15) mittels eines im wesentlichen im Schwerpunkt des Rotors angebrachten Lagers (14) gelagert ist.

**Claims**

1. Centrifugal sifter having a housing which is provided with inlets for sifting material and sifting air or a sifting material - sifting air inlet and outlets for a mixture of sifting air and fine material and for coarse material, and in which at least one rotor formed essentially by a ring of blades is mounted, characterised in that the rotor (2) is mounted in the housing (1) by means of at least one bearing (14, 14a, 14b, 14c, 14d) which is aerostatic or static with respect to inert gas or electromagnetic and simultaneously acts as a seal between the rotor or rotor shaft (15) and housing (1,1a).

2. Centrifugal sifter according to Claim 1, characterised in that an electromagnetic drive is installed in the or in one of the two bearings, in particular electromagnetic bearings, or is mounted on the bearing.

3. Centrifugal sifter according to Claim 1 or 2, having a seal between a suction pipe (12) and the rotor (2), characterised in that the seal is formed as labyrinth packing.

4. Centrifugal sifter according to Claim 3, wherein the rotor blades (3) are held together by a ring at their end opposite a disc (4), characterised in that there is provided on the ring (11) a peripheral groove (18) in which a ring (17) mounted at the end of the suction pipe (12) engages.

5. Centrifugal sifter according to Claim 4, characterised in that a bearing which is aerostatic or static with respect to inert gas or electromagnetic is provided between the suction pipe (12) and rotor (2).

6. Centrifugal sifter according to any one of Claims 1 to 5, characterised in that there is mounted between two bearings (14c,14d), which are aerostatic or static with respect to inert gas, of the shaft (15) of the rotor (2) the armature (22) of an electromagnetic drive of which the stator (23) is located on the inner periphery of a housing (21) mounted on the housing end wall (1a).

7. Centrifugal sifter according to any one of Claims 1 to 5, characterised in that there is mounted on a ring (11a) opposite the suction tube (12) of the rotor (2) an inwardly extending cone (24) of which the end is formed as a boss (25) for the rotor shaft (15); and in that there extends in the cone (24) a bearing bush (26) which is secured to the housing end wall (1a) and in which the rotor shaft (15) is mounted by means of a bearing (14) mounted essentially at the centre of gravity of the rotor.

**Revendications**

1. Séparateur à force centrifuge avec un corps pourvu d'orifices d'entrée pour la matière à séparer et l'air de séparation, ou un orifice matière-air, et d'orifices de sortie pour le mélange air de séparation-matières fines et matières grossières, dans lequel au moins un rotor est disposé, ledit rotor étant formé essentiellement par une couronne d'aubes, caractérisé par le fait que le rotor (2) est monté dans le corps (1) sur au moins un palier aérostatique ou statique à gaz inerte ou électromagnétique (14, 14a, 14b, 14c, 14d), servant également de joint entre le rotor ou l'arbre de rotor (15) et le corps (1).

2. Séparateur suivant revendication 1, caractérisé par le fait qu'un entraînement électromagnétique est monté dans ou sur le ou l'un des deux palier(s), en particulier le palier électromagnétique.

3. Séparateur suivant revendication 1 ou 2, comportant un joint entre un tube d'extraction (12) et le rotor (2), caractérisé par le fait que le joint est de type labyrinthe.

4. Séparateur suivant revendication 3, les aubes de rotor (3) étant tenu ensemble par un anneau à leur extrémité apposée à un disque (4), caractérisé par le fait que sur l'anneau (11) une rainure circulaire (18) est prévue dans laquelle s'engage un anneau (17) fixé à l'extrémité du tube d'extraction (12).

5. Séparateur suivant revendication 4, caractérisé par le fait qu'un palier aérostatique ou statique à gaz inerte ou électromagnétique est prévu entre le tube d'extraction (12) et le rotor (2).

6. Séparateur suivant l'une des revendications 1 à 5, caractérisé par le fait que l'induit (22) d'un entraînement électromagnétique est disposé entre deux paliers aérostatiques ou statiques à gaz inerte (14c, 14d) de l'arbre (15) du rotor (2), le stator du dit entraînement étant monté dans un boîtier (21) sur la paroi frontale (1a) du corps.

7. Séparateur suivant l'une des revendications 1 à 5, caractérisé par le fait que sur un anneau (11a) du rotor (2), opposé au tube d'extraction (12), un cône (24) est fixé dont l'extrémité forme le moyeu (25) pour l'arbre rotor (15), et qu'un coussinet (26), fixé sur la paroi frontale du corps (1a), s'étend dans le cône (24), servant ainsi de palier à l'arbre rotor (15) au moyen d'un roulement (14) fixé essentiellement au centre de gravité du rotor.

**Fig. 1**

**Fig. 2**

**Fig. 3**

**Fig. 4**

Spülluft

*Fig. 5*

Spülluft

*Fig. 6*

9